# EUROPEAN PATENT APPLICATION

(11) **EP 4 510 338 A1**
(43) Date of publication of application: **19.02.2025**
(21) Application number: 22962403.6
(22) Date of filing: 20.10.2022
(51) Int. Cl.: H01M 50/244, H01M 50/204, H01M 50/289

(54) **BATTERY BOX, BATTERY AND ELECTRICAL DEVICE**

(71) Applicant: Contemporary Amperex Technology Co., Limited, Ningde, Fujian 352100 (CN)
(72) Inventor: WU, Kai, Ningde, Fujian 352100 (CN); YANG, Piaopiao, Ningde, Fujian 352100 (CN); QIAN, Ou, Ningde, Fujian 352100 (CN); CHEN, Xiaobo, Ningde, Fujian 352100 (CN); LI, Yao, Ningde, Fujian 352100 (CN)
(74) Representative: Ran, Handong
(86) International application number: PCT/CN2022/126440
(87) International publication number: WO 2024/082216

(57) **Abstract**

A battery box, a battery and an electrical device. The battery box (41) comprises: a box body (10) having a plurality of side walls defining an accommodating space for accommodating a battery cell (42); and a first pressure relief mechanism (20) arranged on at least one side wall and used for pressure relief of the battery box (41), wherein the first pressure relief mechanism (20) does not protrude outwards from the at least one side wall.

## Description

### Technical Field

The present invention relates to the technical field of batteries, and more particularly to a battery enclosure, a battery, and a power consuming device.

### Background Art

Secondary batteries, especially lithium-ion batteries, which have the advantages of high voltage, large specific energy, long cycle life, environmental friendliness and little pollution, wide operating temperature range, low self-discharge and the like, are widely applied to the field of power units of portable electronic equipment and large new energy electric vehicles, and are significant for solving human environmental pollution and overcoming energy crisis. With the wide application of the lithium-ion batteries, the safety performance of the batteries has become a matter of great concern for users.

### Summary of the Invention

In an aspect of the present disclosure, a battery enclosure is provided. The battery enclosure comprises:
an enclosure body having a plurality of side walls enclosing an accommodating space for accommodating battery cells; and
first pressure relief mechanisms disposed on at least one side wall and used for pressure relief of the battery enclosure;
wherein the first pressure relief mechanisms do not protrude outwardly from the at least one side wall.

According to embodiments, the first pressure relief mechanisms are disposed on the at least one side wall of the enclosure body, and a high-temperature and high-pressure gas generated when the battery cells in the enclosure body are out of control can be released out from the enclosure body through the first pressure relief mechanisms, so that the safety of the battery in use is improved. Also, the first pressure relief mechanisms do not protrude outwardly from the side wall, so that risks such as the failure or damage of the first pressure relief mechanisms caused by collision between the first pressure relief mechanisms and an external structure of the enclosure body can be effectively reduced or avoided, and the safety of the battery in use can further be improved.

In some embodiments, the at least one side wall comprises a bottom plate of the enclosure body, and the first pressure relief mechanisms are disposed on the bottom plate.

The first pressure relief mechanisms are disposed on the bottom plate of the enclosure body, and first pressure relief ports of the first pressure relief mechanisms are flush with an outer surface of the bottom plate or are recessed relative to the outer surface of the bottom plate, so that the high-temperature and high-pressure gas generated when the battery cells are out of control can be discharged from the lower side of the enclosure body, an internal pressure of the enclosure body can be reduced, the first pressure relief mechanisms can be less prone to colliding or pressing a support structure below the enclosure body, the reliability of the first pressure relief mechanisms can thus be ensured, and the safety of the battery in use can be improved.

In some embodiments, the outer surface of the bottom plate has first grooves, and the first pressure relief mechanisms are embedded in the first grooves.

The first grooves are formed in the outer surface of the bottom plate, and the first pressure relief mechanisms are embedded in the first grooves. In this way, the first pressure relief mechanisms are accommodated and fixed by using the recessed structures of the first grooves, so that the requirement can be met that the first pressure relief mechanisms do not protrude outwardly from the outer surface of the bottom plate, and the first pressure relief mechanisms can also be mounted reliably on the bottom plate.

In some embodiments, the inner surface of the bottom plate has first protrusions, and the first protrusions are located on reverse sides of the first grooves.

The inner surface of the bottom plate is provided with the first protrusions located on the reverse sides of the first grooves, the first grooves and the first protrusions may be formed simultaneously on the bottom plate by using a mature technology such as sheet metals, and the bottom plate having the first protrusions and the first grooves can achieve a better structural strength.

In some embodiments, a plurality of first grooves are provided, the plurality of first grooves are arranged at intervals in a first direction, the length direction of the first grooves is parallel to a second direction, the first direction is perpendicular to the second direction, and the first direction and the second direction are both parallel to the outer surface of the bottom plate.

The plurality of first grooves may be arranged at intervals in the first direction x parallel to the outer surface of the bottom plate, so as to dispose a plurality of first pressure relief mechanisms, and each first groove may extend in the second direction, that is, the length direction of the first groove is parallel to the second direction y; the second direction herein is parallel to the outer surface of the bottom plate and also parallel to the first direction, so that a guiding effect on a high-temperature and high-pressure gas flow discharged from the first pressure relief mechanisms can be implemented by using the length direction of the first groove.

In some embodiments, in the height direction of the enclosure body, the outer surface of the bottom plate is lower than the geometric center of the first pressure relief mechanism, and in the height direction of the enclosure body, a ratio W/H of a distance W between the outer surface of the bottom plate and the geometric center of the first pressure relief mechanism to the height H of the enclosure body satisfies: W/H ≥ 0.001.

The W/H is greater than or equal to 0.001, so that the above-mentioned risk caused by the tolerance can be reduced effectively.

In some embodiments, the battery enclosure further comprises:
support bars, which are disposed on the inner surface of the bottom plate and are configured to support the battery cells disposed in the accommodating space,
wherein in the height direction of the enclosure body, the support bars are higher than the first protrusions.

The support bars are disposed on the inner surface of the bottom plate to achieve an effect of supporting the battery cells, and by making the support bars higher than the first protrusions in the height direction of the enclosure body, an exhaust chamber can be formed between the lower ends of the battery cells and the inner surface of the bottom plate, a certain exhaust distance between the battery cells and the first pressure relief mechanism can be ensured, and it can also be ensured that the high-temperature and high-pressure gas discharged from the battery cells is smoothly discharged outwardly through the first pressure relief mechanisms.

In some embodiments, a plurality of support bars are provided, the plurality of support bars are arranged at intervals in the first direction parallel to the outer surface of the bottom plate, and the first protrusion is located between two adjacent support bars.

The plurality of support bars can be used for supporting a plurality rows of battery cells, and by disposing the first protrusion between two adjacent support bars, mutual interference between the first protrusions and the support bars can be avoided.

In some embodiments, the support bars have cavities, the top surfaces of the support bars for supporting the battery cells have a plurality of first through-holes in communication with the cavities, and at least one side surface of the support bar connected to the top surface has a plurality of second through-holes in communication with the cavity.

The support bars having the cavities, the first through-holes and the second through-holes are lighter in weight, so that when the battery cells fail, the high-temperature and high-pressure gas can flow through the support bars. When the first through-holes of the support bars are at least partially aligned with second pressure relief mechanisms at the lower ends of the battery cells, and when the battery cells fail, the high-temperature and high-pressure gas inside the battery cells can enter the cavities of the support bars from the second pressure relief mechanisms through the first through-holes, then flows out of the support bars from the plurality of second through-holes through the cavities, and is later released outwardly from the first pressure relief mechanisms. In this way, the phenomenon can be avoided as much as possible that the high-temperature and high-pressure gas is too quickly released outwardly from the first pressure relief mechanisms, causing the high-temperature and high-pressure gas to generate an open flame outside the battery.

In some embodiments, the at least one side wall comprises at least one side edge plate of the enclosure body, and the first pressure relief mechanisms are disposed on the at least one side edge plate.

The first pressure relief mechanisms are disposed on the side edge plates of the enclosure body, and the first pressure relief ports of the first pressure relief mechanisms are flush with the outer surfaces of the side edge plates or are recessed relative to the outer surfaces of the side edge plates, so that the high-temperature and high-pressure gas generated when the battery cells are out of control can be discharged from side edges of the enclosure body, the internal pressure of the enclosure body can be reduced, the first pressure relief mechanisms can be less prone to colliding or pressing other structures at the sides of the enclosure body, the reliability of the first pressure relief mechanisms can thus be ensured, and the safety of the battery in use can be improved.

In some embodiments, the outer surfaces of the side edge plates have second grooves, and the first pressure relief mechanisms are embedded in the second grooves.

The second grooves are formed in the outer surfaces of the side edge plates, and the first pressure relief mechanisms are embedded in the second grooves. In this way, the first pressure relief mechanisms are accommodated and fixed by using the recessing structures of the second grooves, so that the requirement can be met that the first pressure relief mechanisms do not protrude outwardly from the outer surfaces of the side edge plates, and the first pressure relief mechanisms can also be mounted reliably on the side edge plates.

In some embodiments, the at least one side edge plate comprises two opposite side edge plates, at least two first pressure relief mechanisms are provided, and the at least two first pressure relief mechanisms are respectively disposed on the two opposite side edge plates.

By disposing the at least two first pressure relief mechanisms on the two opposite side edge plates respectively, when the battery cell is out of control, the high-temperature and high-pressure gas inside the enclosure body can be prevented from being released outwardly from the two opposite side edge plates, a path of gas pressure relief can be shortened, and the pressure relief can be more balanced and effective.

In some embodiments, in the height direction of the enclosure body, the ratio W/H of the distance W between the outer surface of the bottom plate and the geometric center of the first pressure relief mechanism to the height H of the enclosure body satisfies: W/H < 1.

The ratio of the distance W to the height H is less than 1, and no first pressure relief mechanisms is disposed on the top cover of the enclosure body, so that the risk is reduced or prevented that the high-temperature and high-pressure gas is ejected upwardly from the top cover of the battery enclosure when the battery cells are out of control and then enters a passenger compartment.

In an aspect of the present disclosure, a battery is provided. The battery comprises:
a battery mentioned above; and
a plurality of battery cells disposed inside the battery enclosure. Such a battery comprising the battery enclosure mentioned above has a higher safety in use.

In some embodiments, each battery cell has an electrode terminal and a second pressure relief mechanism, and in the height direction of the enclosure body, a minimum distance h between a second pressure relief port of the second pressure relief mechanism and the electrode terminal is greater than a minimum distance L between the second pressure relief port of the second pressure relief mechanism and an inlet of the first pressure relief mechanism of the battery enclosure.

The minimum distance h between the second pressure relief port of the second pressure relief mechanism and the electrode terminal of the battery cell is greater than the minimum distance L between the second pressure relief port of the second pressure relief mechanism and the inlet of the first pressure relief mechanism, so that when the battery cell is out of control, the high-temperature and high-pressure gas in the battery cell is released from the second pressure relief port of the second pressure relief mechanism. Since the second pressure relief port is closer to the inlet of the first pressure relief mechanism, the high-temperature and high-pressure gas can be released outwardly from the first pressure relief mechanism as much as possible, and is not prone to flowing to the electrode terminal and thus affecting the insulation properties of the battery cell. In this way, a dedicated exhaust channel disposed inside the battery enclosure may also be omitted, the design can be simplified, and the manufacturing difficulty and costs of the battery enclosure and the battery can be reduced.

In some embodiments, the first pressure relief mechanism is located on a side of the second pressure relief mechanism away from the electrode terminal.

By disposing the first pressure relief mechanism on the side of the second pressure relief mechanism away from the electrode terminal, the high-temperature and high-pressure gas released from the second pressure relief mechanism can be more quickly released outwardly through the first pressure relief mechanism and is not prone to flowing to the electrode terminal and thus affecting the insulation properties of the battery cell.

In the embodiments, the second pressure relief mechanism and the electrode terminal may be located at the bottom end and top end of the battery cell respectively, and the first pressure relief mechanism may be located on the bottom plate of the enclosure body, and in the height direction of the enclosure body, the inlet of the first pressure relief mechanism is lower than the second pressure relief port of the second pressure relief mechanism.

The second pressure relief mechanism and the electrode terminal are disposed at the bottom end and top end of the battery cell respectively, and the first pressure relief mechanism is located on the bottom plate of the enclosure body and is lower than the second pressure relief mechanism, so that the high-temperature and high-pressure gas released from the second pressure relief mechanism can more quickly be discharged outwardly from the bottom of the battery enclosure, and the insulation properties of the battery cells are not affected as much possible or are affected as little as possible.

In some embodiments, orthographic projections of the second pressure relief mechanisms of the battery cells on the inner surface of the bottom plate of the enclosure body do not coincide with orthographic projections of the first pressure relief mechanisms on the inner surface of the bottom plate of the enclosure body.

The orthographic projections of the second pressure relief mechanisms and the first pressure relief mechanisms on the inner surface of the bottom plate do not coincide with each other, so that the high-temperature and high-pressure gas released from the second pressure relief mechanisms can be avoided from being too quickly discharged outwardly through the first pressure relief mechanisms, and thus the risk of open fires outside the battery due to the high-temperature and high-pressure flammable gas can be avoided.

In the embodiments, in the height direction of the enclosure body, a ratio L/S of the minimum distance L to a minimum distance S between the inlet of the first pressure relief mechanism and the electrode terminal satisfies: 0.001 ≤ L/S ≤ 1.

By making the ratio L/S satisfy: 0.001 ≤ L/S ≤ 1, when the battery cell is out of control, the high-temperature and high-pressure gas in the battery cell can be smoothly released outwardly through the second pressure relief mechanisms and the first pressure relief mechanisms, the insulation properties of the battery can be avoided from being affected as much as possible, and thus the safety and reliability of the battery in use can be improved.

In an aspect of the present disclosure, a power consuming device is provided. The power consuming device comprises:
a battery mentioned above, the battery being used for supplying electric energy to the power consuming device.

The power consuming device using the battery mentioned above can achieve better safety in use.

### Brief Description of the Drawings

In order to explain the technical solutions in embodiments of the present disclosure more clearly, the accompanying drawings that need to be used in the embodiments of the present disclosure will be briefly described below. Obviously, the drawings described below show merely some embodiments of the present disclosure, and other drawings can be derived from these drawings by those of ordinary skill in the art without involving any inventive effort.

The present disclosure can be more clearly understood from the following detailed description with reference to the drawings, in which:
FIG. 1 is a schematic structural diagram of a power consuming device according to some embodiments of the present disclosure;
FIG. 2 is a schematic structural diagram of a battery according to some embodiments of the present disclosure;
FIGS. 3 and 4 are respectively schematic exploded diagrams of a battery according to some embodiments of the present disclosure from different perspectives;
FIG. 5 is a schematic diagram of an xz section of a battery according to some embodiments of the present disclosure;
FIG. 6 is a schematic structural diagram of a bottom plate of a battery enclosure according to some embodiments of the present disclosure;
FIGS. 7(a) and 7(b) are schematic structural diagrams of the bottom plate in FIG. 6 from the top perspective and from the bottom perspective respectively;
FIG. 8 is a schematic diagram showing a dimension relationship of a bottom plate of a battery enclosure according to some embodiments of the present disclosure;
FIG. 9 is a schematic structural diagram of a side edge plate of a battery enclosure according to some embodiments of the present disclosure; and
FIG. 10 is a schematic diagram showing a size relationship of a battery according to some embodiments of the present disclosure.

It should be understood that the sizes of all parts shown in the drawings are not drawn to the actual scale. In addition, the same or similar reference numerals denote the same or similar components.

### Description of reference signs:

10: Enclosure body; 11: Bottom plate; 12: Side edge plate; 13: Top cover; 111: First groove; 112: First protrusion; 121: Second groove; 11a: Outer surface of bottom plate; 11b: Inner surface of bottom plate; 12a: Outer surface of side edge plate;
20: First pressure relief mechanism; 21: First pressure relief port; 22: Geometric center; 23, 24: Through-hole; 25: Inlet;
30: Support bar; 31: First through-hole; 32: Second through-hole; 33: Cavity;
40: Battery; 41: Battery enclosure; 42: Battery cell; 421: Electrode terminal; 422: Second pressure relief mechanism; 422a: Second pressure relief port;
50: Vehicle; 51: Controller; 52: Motor.

### Detailed Description of Embodiments

The implementations of the present disclosure will be further described in detail below with reference to the accompanying drawings and embodiments. The following detailed description of the embodiments and the accompanying drawings are used to illustrate the principle of the present disclosure by way of example, but are not intended to limit the scope of the present disclosure. That is, the present disclosure is not limited to the described embodiments.

In the description of the present disclosure, it should be noted that "a plurality of" means two or more, unless otherwise specified. The orientation or position relationship indicated by the terms "upper", "lower", "left", "right", "inner", "outer", etc. is only for the convenience of describing the present disclosure and simplifying the description, rather than indicating or implying that the apparatus or element referred to must have a particular orientation or be constructed and operated in a particular orientation, and therefore should not be construed as a limitation on the present disclosure. In addition, the terms "first", "second", "third", etc. are merely for descriptive purposes, and should not be construed as indicating or implying the relative importance. The term "perpendicular" does not mean being perpendicular in the strict sense, but within an allowable range of tolerance. The term "parallel" does not mean being parallel in the strict sense, but within an allowable range of tolerance.

The orientation terms in the following description all indicate directions shown in the drawings, and do not limit the specific structure in the present disclosure. In the description of the present disclosure, it should be further noted that unless otherwise explicitly specified and defined, the terms "mounting", "connecting" and "connection" should be understood in a broad sense, for example, they may be a fixed connection, a detachable connection, or an integrated connection; and may be a direct connection, or an indirect connection by means of an intermediate medium. For those of ordinary skill in the art, the specific meanings of the above terms in the present disclosure can be understood according to specific circumstances.

Some implementations of the present invention will be described in detail below with reference to the accompanying drawings. The features in the following embodiments may be combined with each other without conflicts.

In some related arts, a first explosion-proof valve is disposed on a bottom plate of a battery enclosure as a pressure relief mechanism, and a special gas flow channel structure for guiding a high-temperature and high-pressure gas discharged from the explosion-proof valve of a battery cell towards the first explosion-proof valve is disposed inside an enclosure body. The inventor found after research that since the first explosion-proof valve may protrude from the surface of the bottom plate due to poor structural design or assembly work, etc., in some scenarios, such as when the battery is mounted in a vehicle, the first explosion-proof valve may be bumped or pressed by other structures to cause failure of the first explosion-proof valve, thus affecting the safety of the battery in use. In addition, providing the special gas flow channel structure in the enclosure body makes the enclosure body of the battery enclosure more complicated in design, resulting in an increase in the manufacturing difficulty and the manufacturing costs of the battery enclosure and the battery. In view of this, the embodiments of the present disclosure provide a battery enclosure, a battery, and a power consuming device, which can improve the safety of the battery in use.

The battery enclosure of the embodiments of the present disclosure is applicable to various types of batteries. The battery may be configured to supply power to the power consuming device such as a vehicle, for example, to provide a power supply for vehicle control or a power supply for vehicle driving. The battery comprises a battery cell and the battery enclosure configured to accommodate the battery cell. The battery cell may comprise a lithium-ion secondary battery, a lithium-ion primary battery, a lithium-sulfur battery, a sodium-lithium-ion battery, a sodium-ion battery or a magnesium-ion battery, etc., which are not limited in the embodiments of the present disclosure. The battery cell may be cylindrical, flat, cuboid or in another shape, which will not be limited by the embodiments of the present disclosure.

The battery enclosure may accommodate various forms of battery cells, for example, a battery module comprising a plurality of battery cells electrically connected to each other in series, in parallel, or in series and parallel. The battery module may be mounted in an enclosure body of the battery enclosure. As the smallest constitutional unit of the battery, the battery cell may comprise an electrode assembly where an electrochemical reaction can occur.

The battery of the embodiments of the present disclosure can be applied to various types of power consuming devices using batteries. The power consuming device may be, for example, a mobile phone, portable equipment, a laptop, an electric moped, an electric vehicle, a ship, a spacecraft, an electric toy, or an electric tool. For example, the spacecraft includes an airplane, a rocket, a space shuttle, or a spaceship. The electric toy includes a fixed or mobile electric toy, such as a game console, an electric vehicle toy, an electric ship toy, and an electric airplane toy. The electric tool includes an electric tool for metal cutting, an electric tool for grinding, an electric tool for assembling and an electric tool for railways, such as an electric drill, an electric grinder, an electric wrench, an electric screwdriver, an electric hammer, an electric impact drill, a concrete vibrator, and an electric planer. The power consuming devices mentioned above are not specially limited in the embodiments of the present disclosure.

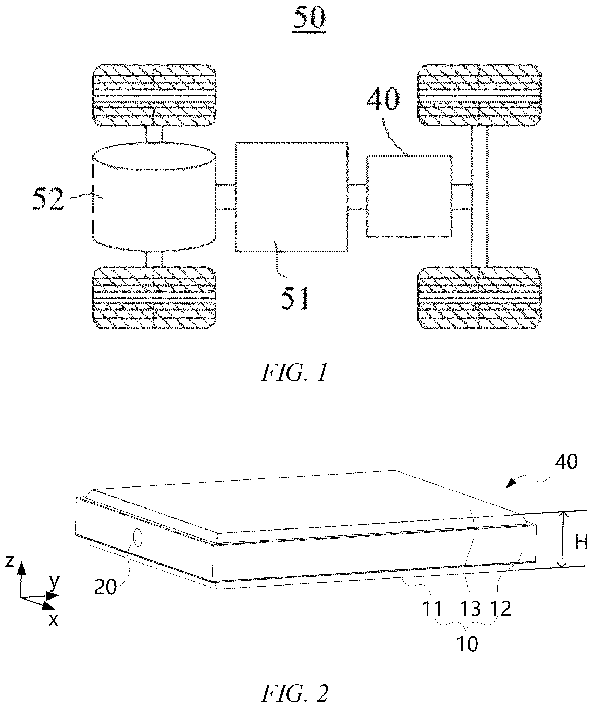

FIG. 1 is a schematic structural diagram of a power consuming device according to some embodiments of the present disclosure. For ease of description, an example in which the power consuming device is a vehicle is taken for description. The vehicle 50 may be a fuel vehicle, a gas vehicle, or a new energy vehicle, and the new energy vehicle may be a battery electric vehicle or a hybrid electric vehicle, etc. A battery 40 may be disposed at the bottom, the head or the tail of the vehicle 50.

The battery 40 may be configured to supply power to the vehicle 50. For example, the battery 40 can serve as an operation power supply of the vehicle 50 for use in a circuit system of the vehicle 50, for example, to meet working power requirements during startup, navigation and running of the vehicle 50. The battery 40 may not only serve as the operation power supply of the vehicle 50, but also serve as a driving power supply of the vehicle 50, replacing or partially replacing fuel or natural gas to provide driving power for the vehicle 50.

An axle, wheels, a motor 52 and a controller 51 may also be disposed inside the vehicle 50. The controller 51 is configured to control the battery 40 to supply power to the motor 52. For example, when the vehicle 50 uses the battery 40 as a driving power supply, the controller 51 can provide the motor 52 with power required for constant-speed and accelerated travel. The motor 52 is configured to drive the axle to rotate so as to drive the wheels to rotate.

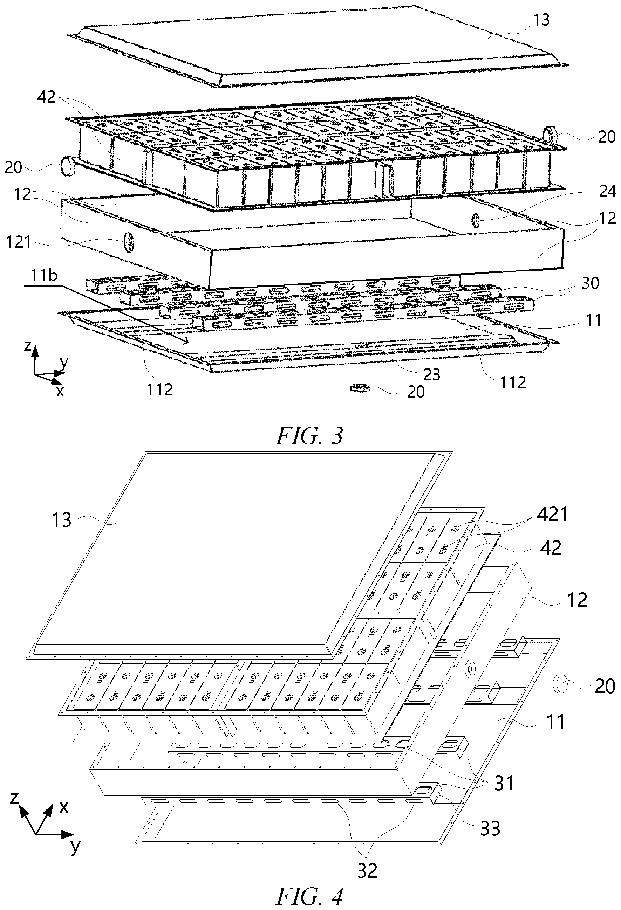

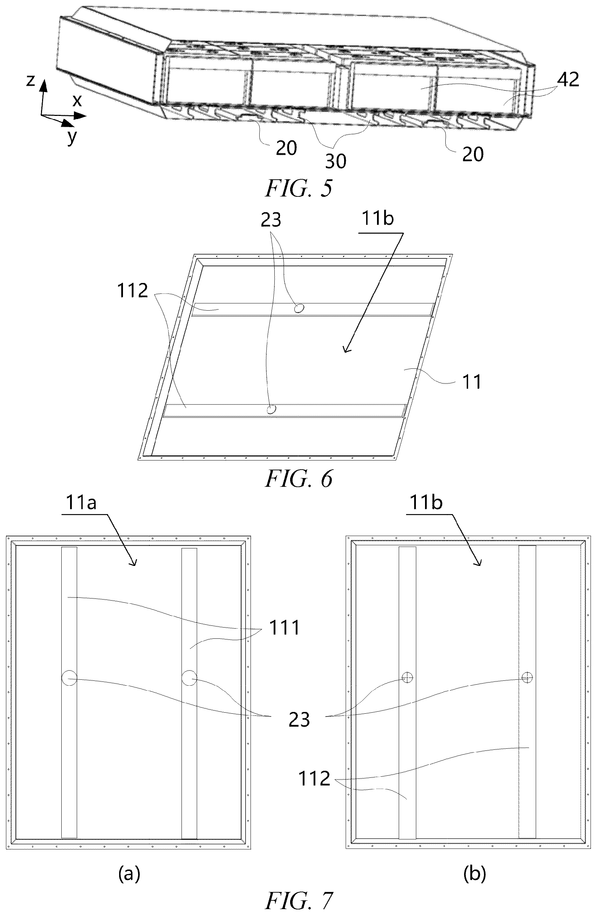

FIG. 2 is a schematic structural diagram of the battery according to some embodiments of the present disclosure. FIGS. 3 and 4 are respectively schematic exploded diagrams of the battery according to some embodiments of the present disclosure from different perspectives. FIG. 5 is a schematic diagram of an xz section of the battery according to some embodiments of the present disclosure.

Referring to FIGS. 2-5, in some embodiments, the battery 40 comprises a battery enclosure 41, and a plurality of battery cells 42 disposed in the battery enclosure 41. The battery enclosure 41 may provide accommodation, supporting, cooling, sealing, anti-collision functions and the like for the battery cells 42, and can further avoid the adverse effect of an external liquid or other foreign matters on the charging and discharging or the safety of the battery cells.

In FIGS. 2-5, the battery cells 42 are electrically connected to each other, for example, in series, in parallel or in series-parallel, to achieve required electrical performance parameters of the battery 40. A plurality of battery cells 42 are disposed in rows, and one or more rows of battery cells 42 may be disposed in the enclosure body as desired.

In some embodiments, the battery cells 42 of the battery 40 may be arranged in at least one of a length direction and a width direction of the battery enclosure. At least one row or one column of battery cells 42 may be arranged according to actual needs. One or more layers of battery cells 42 may further be arranged in a height direction of the battery 40 as desired.

In some embodiments, a plurality of battery cells 42 may be connected in series, in parallel or in series-parallel to form a battery module, and then the plurality of battery modules are connected in series. in parallel or in series-parallel to form a whole and are accommodated in the battery enclosure 41. In some other embodiments, all the battery cells 42 are directly connected together in series, in parallel or in series-parallel, and then a unit composed of all the battery cells 42 is accommodated in the battery enclosure 41.

Referring to FIGS. 2-4, the embodiments of the present disclosure provide a battery enclosure 41, which comprises: an enclosure body 10 and first pressure relief mechanisms 20. The enclosure body 10 has a plurality of side walls enclosing an accommodating space for accommodating the battery cells 42. The first pressure relief mechanisms 20 are arranged on at least one of the side walls and used for pressure relief of the battery enclosure 41. The first pressure relief mechanisms 20 do not protrude outwardly from the at least one side wall.

In the embodiments, the first pressure relief mechanisms 20 are arranged on the at least one side wall of the enclosure body 10, and a high-temperature and high-pressure gas generated when the battery cells 42 in the enclosure body 10 are out of control can be released out from the enclosure body 10 through the first pressure relief mechanisms 20, so that the safety of the battery 40 in use is improved. Also, the first pressure relief mechanisms 20 do not protrude outwardly from the side wall, so that risks such as the failure or damage of the first pressure relief mechanisms 20 caused by collision between the first pressure relief mechanisms 20 and an external structure of the enclosure body 10 can be effectively reduced or avoided, and the safety of the battery 40 in use can further be improved.

In the embodiments, the plurality of side walls of the enclosure body 10 may include a bottom plate 11, side edge plates 12 and a top cover 13, and the bottom plate 11, the side edge plates 12 and the top cover 13 may be sequentially stacked to enclose the internal accommodating space. In FIG. 3, the four side edge plates 12 are connected to form a rectangular frame, and the bottom plate 11 and the top cover 13 are respectively arranged on the upper side and the lower side of the rectangular frame. In other embodiments, the plurality of side walls of the enclosure body 10 may further include a bottom plate 11 and a top cover 13, and the bottom plate 11 and the top cover 13 are sequentially stacked to enclose an internal accommodating space.

The first pressure relief mechanisms 20 are used for releasing an internal pressure of the battery enclosure 41. In some embodiments, the first pressure relief mechanism 20 may be an explosion-proof valve, or may be an explosion-proof sheet, an air valve, a pressure relief valve, a safety valve, or etc.

For the ease of description, referring to FIGS. 2-5, the height direction of the battery enclosure 41 is defined as z, and on a plane perpendicular to the height direction z of the battery enclosure 41, a first direction x and a second direction y direction perpendicular to each other may serve as a length direction and a width direction of the battery enclosure 41 respectively. The plurality of battery cells 42 may be arranged in an array in the first direction X and the second direction Y. With regard to each side wall of the enclosure body 10, an inner side and an outer side are defined by means of an internal portion and an external portion of the enclosure body 10. For example, an inner surface of a certain side wall is a surface of the side wall adjacent to the accommodating space inside the enclosure body, and an outer surface is a surface of the side wall away from the accommodating space inside the enclosure body.

In a general placement state of the battery enclosure 41, the bottom plate 11 of the battery enclosure 41 is at least partially located below the battery cells 42, and the top cover 13 is at least partially located above the battery cells 42. The battery enclosure 41 may be placed in other directions, for example, when the battery enclosure 41 is disposed horizontally, one side edge plate is at least partially located below the battery cells 42, and the other side edge plate 12 opposite to the side edge plate is at least partially located above the battery cells 42; and for another example, the battery enclosure 41 may be disposed inversely, that is, the top cover 13 of the battery enclosure 41 is at least partially located below the battery cells 42, and the bottom plate 11 is at least partially located above the battery cells 42.

Referring to FIG. 3 and FIG. 5, in some embodiments, the at least one side wall comprises the bottom plate 11 of the enclosure body 10, and the first pressure relief mechanisms 20 are disposed on the bottom plate 11. The first pressure relief mechanisms 20 may be disposed on the bottom plate 11 in various arrangement manners, such as snap fitting, bonding, bolt-based connection, etc. In the embodiments, the first pressure relief mechanisms 20 are disposed on the bottom plate 11 of the enclosure body 10, and first pressure relief ports 21 of the first pressure relief mechanisms 20 are flush with an outer surface 11a of the bottom plate 11 or are recessed relative to the outer surface 11a of the bottom plate 11, so that the high-temperature and high-pressure gas generated when the battery cells 42 are out of control can be discharged from the lower side of the enclosure body 10, the internal pressure of the enclosure body 10 can be reduced, the first pressure relief mechanisms 20 can be less prone to colliding or pressing a support structure below the enclosure body 10, the reliability of the first pressure relief mechanisms 20 can thus be ensured, and the safety of the battery 40 in use can be improved.

FIG. 6 is a schematic structural diagram of the bottom plate of the battery enclosure according to some embodiments of the present disclosure. FIGS. 7(a) and 7(b) are schematic structural diagrams of the bottom plate in FIG. 6 from the top perspective and the bottom perspective respectively. Referring to FIG. 7(a), in some embodiments, the outer surface 11a of the bottom plate 11 has first grooves 111, and the first pressure relief mechanisms 20 is embedded in the first grooves 111. In the height direction z of the enclosure body 10, groove walls and groove bottoms of the first grooves 111 are higher than the outer surface of the bottom plate 11. In FIG. 7(a), the groove bottoms of the first grooves 111 may be provided with through-holes 23 for communicating the inside with the outside of the bottom plate 11.

The first grooves 111 are formed in the outer surface 11a of the bottom plate 11, and the first pressure relief mechanisms 20 are embedded in the first grooves 111. In this way, the first pressure relief mechanisms 20 are accommodated and fixed by using the recessed structures of the first grooves 111, so that the requirement can be met that the first pressure relief mechanisms 20 do not protrude outwardly from the outer surface 11a of the bottom plate 11, and the first pressure relief mechanisms 20 can also be mounted reliably on the bottom plate 11.

Referring to FIGS. 3-6 and FIG. 7(b), in some embodiments, the inner surface 11b of the bottom plate 11 has first protrusions 112, and the first protrusions 112 are located on reverse sides of the first grooves 111. In this structure, the inner surface 11b of the bottom plate 11 is provided with the first protrusions 112 located on the reverse sides of the first grooves 111, wherein the first grooves 111 and the first protrusions 112 may be formed simultaneously on the bottom plate 11 by using a mature technology such as sheet metals. In addition, the bottom plate 11 having the first protrusions 112 and the first grooves 111 can achieve a better structural strength, can be resistant to impact, and is not prone to deformation.

The first grooves 111 may have cross sections in a plurality of shapes, such as circular cross sections or polygonal cross sections, and one or more first grooves 111 may be provided. For the plurality of first grooves 111, at least one first pressure relief mechanism 20 may be disposed in each first groove 111. Referring to FIG. 3-7(b), in some embodiments, a plurality of first grooves 111 are provided, the plurality of first grooves 111 are arranged at intervals in the first direction x, the length direction of the first grooves 111 is parallel to a second direction y, the first direction x is perpendicular to the second direction y, and the first direction x and the second direction y are both parallel to the outer surface 11a of the bottom plate 11.

The plurality of first grooves 111 may be arranged at intervals in the first direction x parallel to the outer surface 11a of the bottom plate 11, so as to dispose a plurality of first pressure relief mechanisms 20, and each first groove 111 may extend in the second direction y, that is, the length direction of the first groove 111 is parallel to the second direction y; the second direction y herein is parallel to the outer surface 11a of the bottom plate 11 and also parallel to the first direction x, so that a guiding effect on the high-temperature and high-pressure gas flow discharged from the first pressure relief mechanisms 20 can be implemented by using the length direction of the first grooves 111.

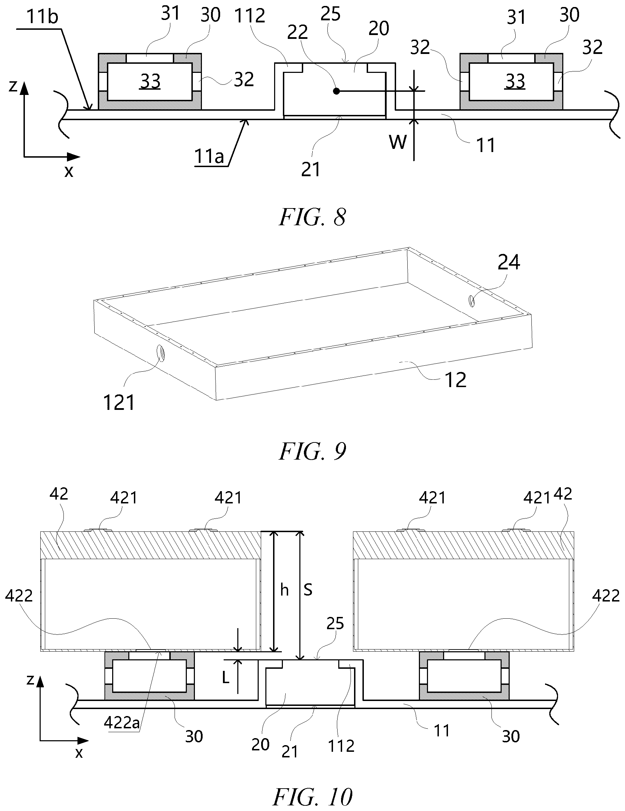

FIG. 8 is a schematic diagram showing a size relationship of the bottom plate of the battery enclosure according to some embodiments of the present disclosure. Referring to FIG. 8, in some embodiments, in the height direction z of the enclosure body 10, the outer surface 11a of the bottom plate 11 is lower than the geometric center 22 of the first pressure relief mechanism 20, and in the height direction z of the enclosure body 10, a ratio W/H of a distance W between the outer surface 11a of the bottom plate 11 and the geometric center 22 of the first pressure relief mechanism 20 to the height H (see FIG. 2) of the enclosure body 10 satisfies: W/H ≥ 0.001. The geometric center 22 herein may be a midpoint of the first pressure relief mechanism 20 in the height direction z of the enclosure body 10.

The H may be valued to 50-1000 mm. When the first pressure relief mechanism 20 is disposed on the bottom plate 11, the W may be valued to 1-1000 mm, and when the first pressure relief mechanism 20 is disposed on the side edge plate 12, the W may be valued to 10-990 mm. The distance W represents a recessing depth of the first pressure relief mechanism 20 disposed on the bottom plate 11 relative to the outer surface 11a of the bottom plate 11. Under the condition of considering a tolerance factor, if the recessing depth is set to be too small, the risk still exists that the first pressure relief mechanism 20 protrudes out of the outer surface 11a of the bottom plate 11 and thus collides or presses an external structure. Therefore, when the recessing depth is too small, the W/H is greater than or equal to 0.001, so that the above-mentioned risk caused by the tolerance can be reduced effectively.

Referring to the above embodiments, in an experimental example, the H was valued to 200 mm, the W was valued to 20 mm, the W/H was 0.1 after calculation, and the value of W/H met the requirement of W/H ≥ 0.001. In an experimental result, the first pressure relief mechanism 20 can reliably and effectively relieve a pressure.

Referring to the above embodiments, in another experimental example, the H was valued to 200 mm, the W was valued to 5 mm, the W/H was 0.025 after calculation, and the value of W/H met the requirement of W/H ≥ 0.001. In an experimental result, the first pressure relief mechanism 20 can reliably and effectively relieve a pressure.

Referring to the above embodiments, in a comparative experimental example, the H was valued to 1000 mm, the W was valued to 0.5 mm, the W/H was 0.0005 after calculation, and the value of W/H met the requirement of W/H ≥ 0.001. In an experimental result, the first pressure relief mechanism 20 fails due to collision caused by the outward protrusion of the mechanism relative to the outer surface of the bottom plate.

It can be seen from the above-mentioned experimental example and comparative experimental example that by making the value of W/H satisfy W/H ≥ 0.001, the risk can be effectively reduced that the first pressure relief mechanism 20 protrudes out from the outer surface 11a of the bottom plate 11 due to the tolerance and thus collide or presses the external structure.

Referring to FIGS. 3-8, in some embodiments, the battery enclosure 41 further comprises support bars 30. The support bars 30 are disposed on the inner surface 11b of the bottom plate 11 and are configured to support the battery cells 42 disposed in the accommodating space. Referring to FIGS. 5 and 8, in the height direction z of the enclosure body 10, the support bars 30 are higher than the first protrusions 112.

The support bars 30 are disposed on the inner surface 11b of the bottom plate 11 to achieve an effect of supporting the battery cells 42, and by making the support bars 30 higher than the first protrusions 112 in the height direction z of the enclosure body 10, an exhaust chamber can be formed between the lower ends of the battery cells 42 and the inner surface 11b of the bottom plate 11, a certain exhaust distance between the battery cells 42 and the first pressure relief mechanism 20 can be ensured, and it can also be ensured that the high-temperature and high-pressure gas discharged from the battery cells 42 is smoothly discharged outwardly through the first pressure relief mechanisms 20.

Referring to FIGS 3-5, in some embodiments, a plurality of support bars 30 are provided, the plurality of support bars 30 are arranged at intervals in the first direction x parallel to the outer surface 11a of the bottom plate 11, and the first protrusion 112 is located between two adjacent support bars 30. The plurality of support bars 30 can be used for supporting a plurality rows of battery cells 42, and by disposing the first protrusion 112 between two adjacent support bars 30, mutual interference between the first protrusions 112 and the support bars 30 can be avoided. Referring to FIGS. 4 and 8, in some embodiments, the support bars 30 have cavities 33, the top surfaces of the support bars 30 for supporting the battery cells 42 have a plurality of first through-holes 31 in communication with the cavities 33, and at least one side surface of the support bar 30 connected to the top surface has a plurality of second through-holes 32 in communication with the cavity 33.

The support bars 30 having the cavities 33, the first through-holes 31 and the second through-holes 32 are lighter in weight, which is conductive to reducing the overall weight of the battery. Furthermore, when the battery cells 42 fail, the high-temperature and high-pressure gas can flow through the support bars 30. If the first through-holes 31 of the support bars 30 are at least partially aligned with second pressure relief mechanisms at the lower ends of the battery cells 42, when the battery cells 42 fail, the high-temperature and high-pressure gas inside the battery cells 42 can enter the cavities 33 of the support bars 30 from the second pressure relief mechanisms through the first through-holes 31, then flows out of the support bars 30 from the plurality of second through-holes 32 through the cavities 33, and is later released outwardly from the first pressure relief mechanisms 20. In this way, the phenomenon can be avoided as much as possible that the high-temperature and high-pressure gas is too quickly released outwardly from the first pressure relief mechanisms 20, causing the high-temperature and high-pressure gas to generate an open flame outside the battery 40. The plurality of through-holes 32 can achieve the distribution of the high-temperature and high-pressure gas in the cavities 33, so that the high-temperature and high-pressure gas flowing out of the support bars 30 is more balanced in the length direction of the support bars 30, and the local accumulation of the high-temperature and high-pressure gas is avoided from causing the too high pressure inside the battery enclosure.

In the above-mentioned embodiments, the first pressure relief mechanisms 20 may be disposed on the bottom plate 11 of the enclosure body 10. In other embodiments, the first pressure relief mechanisms 20 may also be disposed on other side walls of the enclosure body 10, or the first pressure relief mechanisms 20 may be disposed on the bottom plate 11, or the first pressure relief mechanisms 20 may also be disposed on other side walls of the enclosure body 10.

FIG. 9 is a schematic structural diagram of the side plate of the battery enclosure according to some embodiments of the present disclosure. Referring to FIGS. 2-4 and 9, in some embodiments, the at least one side wall comprises at least one side edge plate 12 of the enclosure body 10, and the first pressure relief mechanisms 20 are disposed on the at least one side edge plate 12.

In the embodiments, the first pressure relief mechanisms 20 are disposed on the side edge plates 12 of the enclosure body 10, and the first pressure relief ports 21 of the first pressure relief mechanisms 20 are flush with the outer surfaces 12a of the side edge plates 12 or are recessed relative to the outer surfaces 12a of the side edge plates 12, so that the high-temperature and high-pressure gas generated when the battery cells 42 are out of control can be discharged from side edges of the enclosure body 10, the internal pressure of the enclosure body 10 can be reduced, the first pressure relief mechanisms 20 can be less prone to colliding or pressing other structures at the sides of the enclosure body 10, the reliability of the first pressure relief mechanisms 20 can thus be ensured, and the safety of the battery 40 in use can be improved.

Referring to FIGS. 3 and 9, in some embodiments, the outer surfaces 12a of the side edge plates 12 have second grooves 121, and the first pressure relief mechanisms 20 are embedded in the second grooves 121. The groove bottoms of the second grooves 121 may be provided with through-holes 24 used for communicating the inside with the outside of the side edge plates 12.

The second grooves 121 are formed in the outer surfaces of the side edge plates 12, and the first pressure relief mechanisms 20 are embedded in the second grooves 121. In this way, the first pressure relief mechanisms 20 are accommodated and fixed by using the recessing structures of the second grooves 121, so that the requirement can be met that the first pressure relief mechanisms 20 do not protrude outwardly from the outer surfaces of the side edge plates 12, and the first pressure relief mechanisms 20 can also be mounted reliably on the side edge plates 12.

In FIGS. 3 and 9, the at least one side edge plate 12 includes two opposite side edge plates 12, at least two first pressure relief mechanisms 20 are provided, and the at least two first pressure relief mechanisms 20 are respectively disposed on the two opposite side edge plates 12. For example, a first pressure relief mechanism 20 is disposed on each of the two opposite side edge plates 12, and the two first pressure relief mechanisms 20 may be disposed in a symmetrical or staggered manner. In the embodiments, by disposing the at least two first pressure relief mechanisms 20 on the two opposite side edge plates 12 respectively, when the battery cell 42 is out of control, the high-temperature and high-pressure gas inside the enclosure body 10 can be prevented from being released outwardly from the first pressure relief mechanisms 20 on the two opposite side edge plates 12, a path of gas pressure relief can be shortened, and the pressure relief can be more balanced and effective.

In the above embodiments of the battery enclosure, in the height direction z of the enclosure body 10, the ratio W/H of the distance W between the outer surface 11a of the bottom plate 11 and the geometric center 22 of the first pressure relief mechanism 20 to the height H of the enclosure body 10 can satisfy: W/H < 1. The ratio of the distance W to the height H is less than 1, and no first pressure relief mechanisms 20 is disposed on the top cover of the enclosure body 10, the risk is reduced or prevented that the high-temperature and high-pressure gas is ejected upwardly from the top cover of the battery enclosure 41 when the battery cells 42 are out of control and then enters a passenger compartment.

Referring to the above embodiments, in an experimental example, the H was valued to 200 mm, the W was valued to 20 mm, the W/H was 0.1 after calculation, and the value of W/H met the requirement of W/H < 1. In an experimental result, the first pressure relief mechanism 20 can reliably and effectively relieve the pressure without releasing the high-temperature and high-pressure gas upwardly.

Referring to the above embodiments, in another experimental example, the H was valued to 200 mm, the W was valued to 5 mm, the W/H was 0.025 after calculation, and the value of W/H met the requirement of W/H < 1. In an experimental result, the first pressure relief mechanism 20 can reliably and effectively relieve the pressure without releasing the high-temperature and high-pressure gas upwardly.

Referring to the above embodiments, in a comparative experimental example, the H was valued to 200 mm, the W was valued to 200 mm, the W/H was 1 after calculation, and the value of W/H met the requirement of W/H < 1. According to the experimental results, since the first pressure relief mechanisms are disposed on the top cover, the first pressure relief mechanisms release the high-temperature and high-pressure gas upwardly, thereby bringing the risk of the gas entering the passenger compartment.

It can be seen from the above-mentioned experimental example and comparative experimental example that by making the value of W/H satisfy W/H < 1, the risk can be reduced or avoided that the high-temperature and high-pressure gas is ejected upwardly from the top cover of the battery enclosure 41 when the battery cells 42 are out of control and then enters the passenger compartment. The embodiments of the battery enclosure mentioned above can be applied to various types of batteries. Referring to FIGS. 2-5, the embodiments of the present disclosure provide a battery 40, comprising the battery enclosure 41 and a plurality of battery cells 42 that are mentioned above. The plurality of battery cells 42 are disposed inside the battery enclosure 41. Such a battery 40 comprising the battery enclosure 41 mentioned above has a higher safety in use.

FIG. 10 is a schematic diagram showing a size relationship of a battery according to some embodiments of the present disclosure. Referring to FIGS. 4 and 10, in some embodiments, each battery cell 42 has an electrode terminal 421 and a second pressure relief mechanism 422. With regard to the plurality of battery cells, the electrode terminals 421 of the battery cells can be electrically connected by means of components such as busbars. The second pressure relief mechanism 422 is used for releasing the internal pressure of the battery cell 42. For example, when the battery cell 42 is out of control such as thermal runaway, the high-temperature and high-pressure gas generated inside can be released from the second pressure relief mechanism 422 to the outside. In some embodiments, the second pressure relief mechanism 422 may be an explosion-proof valve, or may be an explosion-proof sheet, an air valve, a pressure relief valve, a safety valve, or etc.

In the height direction z of the enclosure body 10, a minimum distance h between a second pressure relief port 422a of the second pressure relief mechanism 422 and the electrode terminal 421 is greater than a minimum distance L between the second pressure relief port 422a of the second pressure relief mechanism 422 and an inlet 25 of the first pressure relief mechanism 20 of the battery enclosure 41.

After the battery cell 42 is out of control, the high-temperature and high-pressure gas in the battery cell 42 is released from the second pressure relief port 422a of the second pressure relief mechanism 422. Since the second pressure relief port 422a is closer to the inlet 25 of the first pressure relief mechanism 20, the high-temperature and high-pressure gas can be released outwardly from the first pressure relief mechanism 20 as much as possible, and is not prone to flowing to the electrode terminal 421 and thus affecting the insulation properties of the battery cell 42. In this way, a dedicated exhaust channel disposed inside the battery enclosure 41 may also be omitted, the design can be simplified, and the manufacturing difficulty and costs of the battery enclosure 41 and the battery 40 can be reduced.

Referring to FIG. 10, in some embodiments, the first pressure relief mechanism 20 is located on a side of the second pressure relief mechanism 422 away from the electrode terminal 421. In this way, by disposing the first pressure relief mechanism 20 on the side of the second pressure relief mechanism 422 away from the electrode terminal 421, the high-temperature and high-pressure gas released from the second pressure relief mechanism 422 can be more quickly released outwardly through the first pressure relief mechanism 20 and is not prone to flowing to the electrode terminal 421 and thus affecting the insulation properties of the battery cell 42.

In FIG. 10, the second pressure relief mechanism 422 and the electrode terminal 421 may be located at the bottom end and top end of the battery cell 42 respectively, and the first pressure relief mechanism 20 may be located on the bottom plate 11 of the enclosure body 10, and in the height direction z of the enclosure body 10, the inlet 25 of the first pressure relief mechanism 20 is lower than the second pressure relief port 422a of the second pressure relief mechanism 422.

The second pressure relief mechanism 422 and the electrode terminal 421 are disposed at the bottom end and top end of the battery cell 42 respectively, so that the first pressure relief mechanism 20 is located on the bottom plate 11 of the enclosure body 10 and is lower than the second pressure relief mechanism 422. In this way, the high-temperature and high-pressure gas released from the second pressure relief mechanism 422 can more quickly be discharged outwardly from the bottom of the battery enclosure 41, and the insulation properties of the battery cells 42 are not affected as much possible or are affected as little as possible.

Referring to FIG. 10, in some embodiments, orthographic projections of the second pressure relief mechanisms 422 of the battery cells 42 on the inner surface 11b of the bottom plate 11 of the enclosure body 10 do not coincide with orthographic projections of the first pressure relief mechanisms 20 on the inner surface 11b of the bottom plate 11 of the enclosure body 10.

The orthographic projections of the second pressure relief mechanisms 422 and the first pressure relief mechanisms 20 on the inner surface 11b of the bottom plate 11 do not coincide with each other, so that the high-temperature and high-pressure gas released from the second pressure relief mechanisms 422 can be avoided from being too quickly discharged outwardly through the first pressure relief mechanisms 20, and thus the risk of open fires outside the battery 40 due to the high-temperature and high-pressure flammable gas can be avoided.

In the above-mentioned embodiments of the battery, the second pressure relief mechanisms 422 are not limited to being disposed at the bottom end of the battery cells, and may also be disposed at other parts of the battery cells, such as the side walls or the top ends, while the first pressure relief mechanisms 20 are not limited to being disposed on the bottom plate, and may also be disposed on other side walls of the enclosure body 10.

Referring to FIG. 10, in the height direction z of the enclosure body 10, a ratio L/S of the minimum distance L between the second pressure relief port 422a of the second pressure relief mechanism 422 and the inlet 25 of the first pressure relief mechanism 20 of the battery enclosure 41 to the minimum distance S between the inlet 25 of the first pressure relief mechanism 20 and the electrode terminal 421 may satisfy: 0.001 ≤ L/S ≤ 1.

When the first pressure relief mechanism 20 is disposed on the bottom plate 11, L may be valued to 1-200 mm, and S may be valued to 5-1000 mm. When the first pressure relief mechanism 20 is disposed on the side edge plate 12, L may be valued to 1-800 mm, and S may be valued to 1-1000 mm. L represents the distance between the second pressure relief port 422a of the second pressure relief mechanism 422 and the inlet 25 of the first pressure relief mechanism 20 of the battery enclosure 41. If L is much less than S, it means that the second pressure relief port 422a of the second pressure relief mechanism 422 is too close to the inlet 25 of the first pressure relief mechanism 20, and the exhaust distance is insufficient, which affects the outward smooth release of the high-temperature and high-pressure gas discharged from the battery cell 42. If L is much greater than S, the inlet 25 of the surface first pressure relief mechanism 20 is closer to the electrode terminal 421, so that when the high-temperature and high-pressure gas is released outwardly through the first pressure relief mechanism 20, it is prone to flowing to the electrode terminal 421 and thus affecting the insulation properties of the battery 40.

Therefore, by making the ratio L/S satisfy: 0.001 ≤ L/S ≤ 1, when the battery cell 42 is out of control, the high-temperature and high-pressure gas in the battery cell 42 can be smoothly released outwardly through the second pressure relief mechanisms 422 and the first pressure relief mechanisms 20, the insulation properties of the battery 40 can be avoided from being affected as much as possible, and thus the safety and reliability of the battery 40 in use can be improved.

Referring to the above embodiments, in an experimental example, L was valued to 20 mm, S was valued to 200 mm, and L/S was 0.1 after calculation. The value of L/S satisfies the requirement of 0.001 ≤ L/S ≤ 1. In an experimental result, when the high-temperature and high-pressure gas in the enclosure body is discharged from the first pressure relief mechanism 20, the problem of affecting the insulation properties of the electrode terminals or busbars is not caused.

Referring to the above-mentioned embodiment, in another experimental example, L was valued to 10 mm, S was valued to 300 mm, and L/S was approximately equal to 0.0333 after calculation. The value of L/S satisfies the requirement of 0.001 ≤ L/S ≤ 1. In an experimental result, when the high-temperature and high-pressure gas in the enclosure body is discharged from the first pressure relief mechanism 20, the problem of affecting the insulation properties of the electrode terminals or busbars is not caused.

Referring to the above embodiment, in a further experimental example, L was valued to 5 mm, S was valued to 1000 mm, and L/S was 0.005 after calculation. The value of L/S satisfies the requirement of 0.001 ≤ L/S ≤ 1. In an experimental result, when the high-temperature and high-pressure gas in the enclosure body is discharged from the first pressure relief mechanism 20, the problem of affecting the insulation properties of the electrode terminals or busbars is not caused. Referring to the above embodiment, in a comparative experimental example, L was valued to 200 mm, S was valued to 20 mm, and L/S was 10 after calculation. The value of L/S does not satisfy the requirement of 0.001 ≤ L/S ≤ 1. In an experimental result, when the high-temperature and high-pressure gas in the enclosure body is discharged from the first pressure relief mechanism 20, the insulation properties of the electrode terminals or busbars are reduced.

It can be seen from the above-mentioned experimental example and comparative experimental example that by making the value of L/S satisfy 0.001 ≤ L/S ≤ 1, when the battery cell 42 is out of control, the high-temperature and high-pressure gas in the battery cell 42 can be smoothly released outwardly through the second pressure relief mechanism 422 and the first pressure relief mechanism 20, the insulation properties of the battery 40 can be avoided from being affected as much as possible, and thus the safety and reliability of the battery 40 in use can be improved.

In an aspect of the present disclosure, a power consuming device is provided. The power consuming device comprises the battery mentioned above, the battery being used for supplying electric energy to the power consuming device. The power consuming device using the battery mentioned above can achieve better safety in use.

Although the present disclosure has been described with reference to the preferred embodiments, various modifications can be made, and equivalents can be provided to substitute for the components thereof without departing from the scope of the present disclosure. In particular, the technical features mentioned in the embodiments can be combined in any manner, provided that there is no structural conflict. The present disclosure is not limited to the specific embodiments disclosed herein but includes all the technical solutions that fall within the scope of the claims.

## Claims

1. A battery enclosure (41), comprising:
an enclosure body (10) having a plurality of side walls enclosing an accommodating space for accommodating battery cells (42); and
first pressure relief mechanisms (20) disposed on at least one side wall and used for pressure relief of the battery enclosure (41),
wherein the first pressure relief mechanisms (20) do not protrude outwardly from the at least one side wall.

2. The battery enclosure (41) according to claim 1, wherein the at least one side wall comprises a bottom plate (11) of the enclosure body (10), and the first pressure relief mechanisms (20) are disposed on the bottom plate (11).

3. The battery enclosure (41) according to claim 2, wherein an outer surface (11a) of the bottom plate (11) has first grooves (111), and the first pressure relief mechanisms (20) are embedded in the first grooves (111).

4. The battery enclosure (41) according to claim 3, wherein an inner surface (11b) of the bottom plate (11) has first protrusions (112), and the first protrusions (112) are located on reverse sides of the first grooves (111).

5. The battery enclosure (41) according to claim 3 or 4, wherein a plurality of first grooves (111) are provided, the plurality of first grooves (111) are arranged at intervals in a first direction (x), a length direction of the first grooves (111) is parallel to a second direction (y), the first direction (x) is perpendicular to the second direction (y), and the first direction (x) and the second direction (y) are both parallel to the outer surface (11a) of the bottom plate (11).

6. The battery enclosure (41) according to any one of claims 2-5, wherein in a height direction (z) of the enclosure body (10), an outer surface (11a) of the bottom plate (11) is lower than a geometric center (22) of the first pressure relief mechanism (20), and a ratio W/H of a distance W between the outer surface (11a) of the bottom plate (11) and the geometric center (22) of the first pressure relief mechanism (20) to a height H of the enclosure body (10) satisfies: W/H ≥ 0.001.

7. The battery enclosure (41) according to any one of claims 4-6, further comprising:
support bars (30), which are disposed on an inner surface (11b) of the bottom plate (11) and are configured to support the battery cells (42) disposed in the accommodating space,
wherein in a height direction (z) of the enclosure body (10), the support bars (30) are higher than the first protrusions (112).

8. The battery enclosure (41) according to claim 7, wherein a plurality of support bars (30) are provided, the plurality of support bars (30) are arranged at intervals in a first direction (x) parallel to an outer surface (11b) of the bottom plate (11), and the first protrusion (112) is located between two adjacent support bars (30).

9. The battery enclosure (41) according to claim 7 or 8, wherein the support bars (30) have cavities (33), top surfaces of the support bars (30) for supporting the battery cells (42) have a plurality of first through-holes (31) in communication with the cavities (33), and at least one side surface of the support bar (30) connected to the top surface has a plurality of second through-holes (32) in communication with the cavity (33).

10. The battery enclosure (41) according to any one of claims 1-9, wherein the at least one side wall comprises at least one side edge plate (12) of the enclosure body (10), and the first pressure relief mechanisms (20) are disposed on the at least one side edge plate (12).

11. The battery enclosure (41) according to claim 10, wherein outer surfaces (12a) of the side edge plates (12) have second grooves (121), and the first pressure relief mechanisms (20) are embedded in the second grooves (121).

12. The battery enclosure (41) according to claim 10 or 11, wherein the at least one side edge plate (12) comprises two opposite side edge plates (12), at least two first pressure relief mechanisms (20) are provided, and the at least two first pressure relief mechanisms (20) are respectively disposed on the two opposite side edge plates (12).

13. The battery enclosure (41) according to any one of claims 1-12, wherein in a height direction (z) of the enclosure body (10), a ratio W/H of a distance W between an outer surface (11a) of a bottom plate (11) and a geometric center (22) of the first pressure relief mechanism (20) to a height H of the enclosure body (10) satisfies: W/H < 1.

14. A battery (40), comprising:
a battery enclosure (41) according to any one of claims 1-13; and
a plurality of battery cells (42) disposed in the battery enclosure (41).

15. The battery (40) according to claim 14, wherein each battery cell (42) has an electrode terminal (421) and a second pressure relief mechanism (422), and in a height direction (z) of the enclosure body (10), a minimum distance h between a second pressure relief port (422a) of the second pressure relief mechanism (422) and the electrode terminal (421) is greater than a minimum distance L between the second pressure relief port (422a) of the second pressure relief mechanism (422) and an inlet (25) of the first pressure relief mechanism (20) of the battery enclosure (41).

16. The battery (40) according to claim 14 or 15, wherein the first pressure relief mechanism (20) is located on a side of the second pressure relief mechanism (422) away from the electrode terminal (421).

17. The battery (40) according to claim 15 or 16, wherein the second pressure relief mechanism (422) and the electrode terminal (421) may be located at a bottom end and a top end of the battery cell (42) respectively, and the first pressure relief mechanism (20) may be located on a bottom plate (11) of the enclosure body (10), and in a height direction (z) of the enclosure body (10), an inlet (25) of the first pressure relief mechanism (20) is lower than a second pressure relief port (422a) of the second pressure relief mechanism (422).

18. The battery (40) according to any one of claims 15-17, wherein an orthographic projection of the second pressure relief mechanism (422) of the battery cell (42) on an inner surface (11b) of a bottom plate (11) of the enclosure body (10) do not coincide with an orthographic projection of the first pressure relief mechanism (20) on the inner surface (11b) of the bottom plate (11) of the enclosure body (10).

19. The battery (40) according to any one of claims 15-18, wherein in a height direction (z) of the enclosure body (10), a ratio L/S of the minimum distance L to a minimum distance S between the inlet (25) of the first pressure relief mechanism (20) and the electrode terminal (421) satisfies: 0.001 ≤ L/S ≤1.

20. A power consuming device, comprising:
a battery (40) of any one of claims 14-19, the battery (40) being used for supplying electric energy to a power consuming device.
